# EUROPEAN PATENT APPLICATION

(11) **EP 3 015 980 A1**
(43) Date of publication of application: **04.05.2016**
(21) Application number: 15191678.0
(22) Date of filing: 27.10.2015
(51) Int. Cl.: G06F 9/445, G06F 12/08, G06F 21/00, G06F 9/455, G06F 12/14, G06F 21/55, G06F 21/75

(54) **METHOD AND APPARATUS FOR CROSS-CORE COVERT CHANNEL**

(30) Priority: 27.10.2014 EP 14306704
(71) Applicant: Thomson Licensing, 92130 Issy-les-Moulineaux (FR)
(72) Inventor: MAURICE, Clémentine, 35576 CESSON-SEVIGNE (FR); HEEN, Olivier, 35576 CESSON-SEVIGNE (FR); NEUMANN, Christoph, 35576 CESSON-SEVIGNE (FR); FRANCILLON, Aurélien, 06410 BIOT (FR)
(74) Representative: Huchet, Anne

(57) **Abstract**

Passing messages between two virtual machines that use a single multicore processor having inclusive cache includes using a cache-based covert channel. A message bit in a first machine is interpreted as a lowest level cache flush. The cache flush in the first machine clears a L1 level cache in the second machine because of the inclusiveness property of the multicore processor cache. The second machine reads its cache and records access time. If the access time is long, then the cache was previously cleared and a logical 1 was sent by the first machine. A short access time is interpreted as a logical 0 by the second machine. By sending many bits, a message can be sent from the first virtual machine to the second virtual machine via the cache-based covert channel without using non-cache memory as a covert channel.

## Description

### FIELD

The invention relates to computer cache architecture. Specifically, the invention relates to the use of a cache configuration that permits a covert channel across cores and virtual machines.

### BACKGROUND

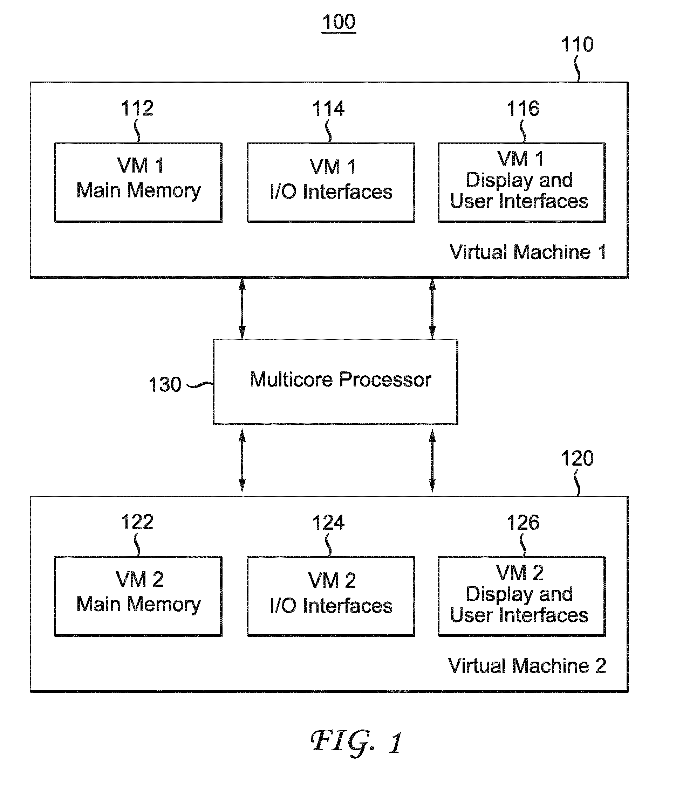

Figure 1 depicts a single computer system that provides an environment for multiple virtual machines. Virtual Machines are computing machines with resources that can operate independently in the same computer system. In Figure 1, a first virtual machine 110 included virtual machine (VM) main memory 112 VM input output interfaces 114, and VM display and user interfaces 116. A second virtual machine 120 also has resources such as main memory 122, I/O interfaces 124, and display and user interfaces 126. In general, hardware and software interfaces, such as memory, software loads, and I/O are separate between the two virtual machines. Some hardware resources, such as a display monitor, may or may not be time shared. However, in general virtual machines operating on the same computer system 100 are independent. In modern computers, multicore processors, such as multicore processor 130 having multiple CPUs, can be used to service different virtual machines in the same physical computer 100. For example, one virtual machine in a given computer system can operate with a Windows™ operating system alongside another virtual machine that operates with a Linux™ operating system. These two virtual machines have different operating environments, yet are running in the same computer because each virtual machine is using a different core of the multi-core processor. Any given virtual machine can operate with any number of cores. One major advantageous characteristic of virtual machines is that they can run independently of one another such that faults in one virtual machine do not affect the other virtual machine.

Communication between virtual machines is generally not encouraged in order to preserve the insulation and fault isolation of one virtual machine from another. Isolation of virtual machines is also critical from a security perspective. However, there may be "covert channels" across cores within a same multi-core processor, allowing communication between virtual machines running over the cores. This type of communication is sometimes referred to as data extrusion, or data leakage.

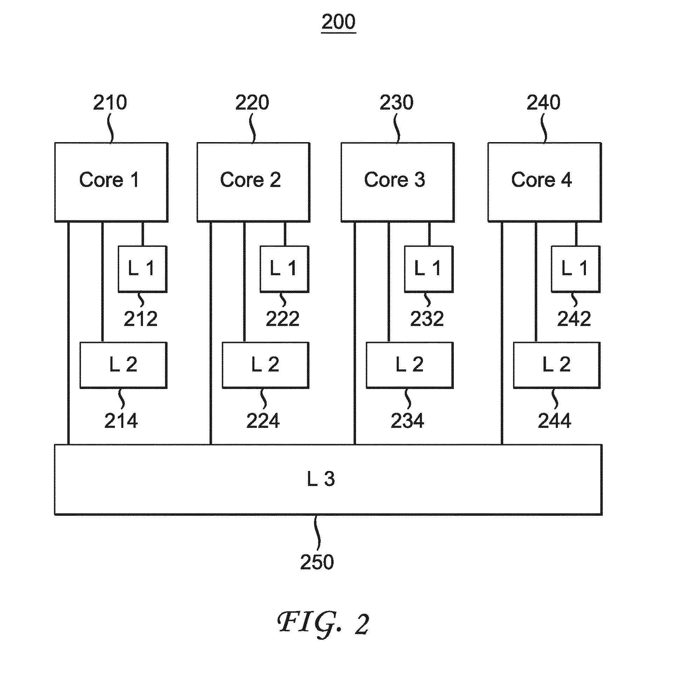

The cache of a computer processor is faster than main memory and stores recently-used data. Since the Nehalem microarchitecture and until the most recent one, Haswell, Intel processors have used a hierarchy of cache similar to the one depicted in Figure 2. There are usually three levels, called L1, L2 and L3. The L3 cache is also called Last Level Cache (LLC). The levels L1 and L2 are private to each core, and store several kilobytes of data. A core is a processing unit, such as a central processing unit (CPU), having elements such as an arithmetic logic unit (ALU) and microinstruction controller. The level L3 is shared between cores, and is also the largest, usually several megabytes in size.

Figure 2 depicts the cache hierarchy 200 in a quad core computing device, such as an Intel™ computer processor. Here, the first core 210 has dedicated L1 212 and L2 214 cache. The second core 220 has dedicated L1 222 and L2 224 cache. The third core 230 has dedicated L1 cache 232 and L2 cache 234. The fourth core 240 has dedicated L1 242 and L2 244 cache. In this architecture, the L3 cache 250 is inclusive, which means it is a superset of the L1 cache. In a cache hierarchy, some caches may be inclusive (e.g. L3 contains L1) while other caches are exclusive (e.g. L2 is exclusive and thus does not contain L1). In Figure 2, each core has access to a dedicated L1 and L2 cache. The L3 cache is commonly accessible by any of the four cores shown in Figure 2. In one example used in the current invention, the L3 cache is inclusive of the L1 cache.

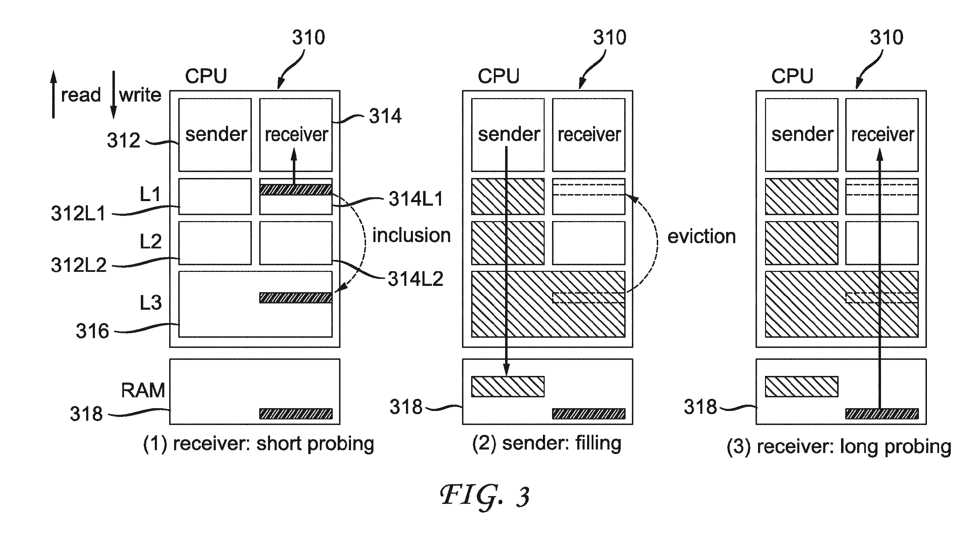

Figures 3a, 3b, and 3c depict a set of operations occurring in a multicore CPU 310 where two virtual machines reside. The sender virtual machine is depicted as using at least one core 312 of the multicore CPU 310. The receiver virtual machine 314 is depicted as using at least one core 314 of the multicore CPU 310. Main memory 318, such as RAM, is outside of the multicore CPU 310, but generally within an apparatus, such as a multicore-based computer system, such as that depicted in Figure 1. The configuration of Figures 3a, and 3b, and 3c are similar. The sender virtual machine 312 uses a core of the CPU 310 that has access to L1 cache 312L1, L2 cache 312L2, and L3 cache 316. The receiver virtual machine 314 uses a core of the CPU 310 that has access to L1 cache 314L1, L2 cache 314L2, and L3 cache 316. Figure 3a depicts a receiver 314 virtual machine reading from L1 cache 314L1. The action of the inclusiveness property of the multicore CPU results in the read action of L1 having a corresponding entry into L3 cache 316. This read action by the receiver 314 results in a cache hit and the access time is small (short probing). Figure 3b depicts the same architecture as Figure 3a, but a different operation. Figure 3b shows a sender 312 filling operation, such as a cache flush, to L3 316. This operation results in writing to all levels of cache of the sender 312 including L1 312L1, L2 312L2, L3 316 and main memory 318. As a result of the write, by the sender, an eviction of information occurs. This information was previously placed in L3 by the receiver in the example operation of Figure 3a. Figure 3c depicts the same architecture as Figure 3a. Here, the receiver 314 reads from L1 314L1 but finds that the information sought is not in L1 cache because of the previous cache flush of the Figure 3b operation. This is a cache miss. The receiver read is finally fulfilled by finding the information in external main memory 318. This read by the receiver 314 results in a cache miss and the access time is greater (long probing). A greater access time is incurred because the information (data) to be retrieved was not found in the receiver L1 cache 314L1. Hence an external access to main memory is incurred, which has a greater access time than L1 cache.

Main memory is memory external to the CPU cores and related cache. Here, the functional grouping of cache and main memory is shown. For example, Core 1 has its dedicated L1 and L2 cache as depicted in Figure 2. Cores 2-4 also have their respective dedicated L1 and L2 cache as shown in Figure 2. L3 cache is accessible by any of the four cores as is main memory. Main memory has the disadvantage of slower access time, but the advantage of greater memory size or capacity as compared to cache.

For any given core, to read or write data in main memory, the core or CPU first checks the memory location in the L1 cache. If the address is found, it is a cache hit and the CPU immediately reads or writes data in the cache line. A cache line is data transferred between memory and cache in blocks of fixed size. When a cache line is copied from memory into the cache, a cache entry is created. The cache entry will include the copied data as well as the requested main memory location (called a tag).

When the processor needs to read or write from or to a location in main memory, it first checks for a corresponding entry in the cache, such as L1 or L2. The cache checks for the contents of the requested memory location in any cache lines that might contain that address. Otherwise, it is a cache miss and the CPU searches in the next level of cache, such as L3, and so on, until main memory is accessed. The operation to access main memory takes longer because it is external to the core cache.

Data is transferred between the cache and the memory in 64-byte blocks called cache lines. The location of a particular line depends on the cache structure. Today's caches are n-way associative, which means that a cache contains sets of n lines. A line is loaded in a specific set, and occupies any of the n lines.

Memory addresses can be decomposed in three parts: the tag, the set, and the offset in the line. The lowest o bits determine the offset in the line, with: o=log2(linesize). The next s bits determine the set, with: s=log2(numberofsets). And the remaining t bits form the tag. The address used to compute the cache location can be the physical or the virtual address. This has important implications. A Virtually Indexed, Virtually Tagged (VIVT) cache only uses virtual addresses to locate the data in the cache. Modern processors involve physical addressing; either Virtually Indexed Physically Tagged (VIPT), or Physically Indexed Physically Tagged (PIPT). The physical address is not known by the processes, thus the location of a specific line cannot be known for physically addressed caches.

When the cache is full, a cache line needs to be evicted before storing a new cache line. Eviction is a removal of one cache line to a next layer of cache that leaves the original cache line available. When a line is evicted from L1 it is stored back to L2, which can lead to the eviction of a new line to L3, etc. The replacement policy decides the "victim block" that is evicted. A good replacement policy chooses to evict the block that is the least likely to be reused. Such policies include Least Recently Used (LRU), Least Frequently Used, Pseudo Random, and Adaptive.

Depending on the cache design, a data stored on a level may also be stored on other levels. As described above, a cache level is inclusive if it is a superset of the inner caches. Intel™ CPUs from Nehalem to Haswell microarchitectures have an inclusive L3. To guarantee the inclusion property, when a block is evicted from the L3, the block is also removed (invalidated) in the inner caches L1 or L2. In the opposite sense, a level is exclusive if a data is present at most once between this level and the inner levels. The current invention operates using inclusive L3 cache.

Cache hits are faster than cache misses. This can be exploited to monitor access patterns, and subsequently to leak information. In access-driven covert channels, a process monitors the time taken by its own activity to determine the cache sets accessed by other processes. Two general strategies can be adopted. In the "prime+probe" technique as is known in the art, process A fills the cache, and then waits for process B to evict some cache sets. Process A finally reads data again to determine sets evicted by B. These sets are going to be longer to reload for process A. Conversely, in "flush+reload" technique as is known in the art, process A flushes the cache, and then waits for process B to reload some cache sets. Process A finally reads data again to determine sets reloaded by B. These sets are going to be faster to reload for A. "Flush+reload" covert channel technique assumes shared lines of cache by A and B, and thus shared memory, else the sets reloaded by B will not be faster to reload by A than the evicted ones.

These covert channel techniques need fine grain measurement. Processors have a timestamp counter for the number of cycles since reset. This counter can be accessed by the rdtsc and rdtscp instructions in the Intel™ instruction set. However, processors support out-of-order execution, which means the execution does not respect the sequence order of instructions as written in the executable. In particular, a reordering of the rdtsc instruction can be lead to the measurement of more, or less, than the sequence that is desired to measure. This can be avoided by the use of serializing instructions, such as cpuid.

In one prior art construction, a covert channel based on L2 cache contention was built using a variant of the "prime+probe" technique. The construction obtained a covert channel bit rate of 0.2 bps. However, there were clear limitations: the sender and receiver must synchronize and share the same core. Experimenters in the prior art have quantified the achievable bit rate: from 215 bps in lab condition, they reached 3 bps using multiple core devices. The dramatic drop is due to the fact that the covert channel constructed does not work across cores, and thus the design has to take into account core migration.

One cache-based covert channel designed used cache regions to encode information. It has been remarked that in a virtualized environment, the uncertainty of the location of data in a cache set fuels the need for a purely time-based protocol. Moreover, the sender and receiver are not scheduled in a round-robin fashion, but simultaneously. The sender writes to the cache when she wants to send a '1', and stops writing to send a '0'. The receiver continuously probes the cache to look for the sender's message. One assumption that has been made is that cache-based covert channels are impracticable due to the need of a shared cache, and build a new covert channel that is based on the main memory bus.

Other prior art investigators have claimed that cache-based covert channels are not practical, and have proposed designing a covert channel that uses the bus of main memory that can communicate across cores. Other investigators use the clflush instruction that flushes a line from the whole memory hierarchy. However, this instruction implies a shared main memory which is not optimum because it relies on deduplication. Assuming explicitly shared memory between Virtual Machines is not realistic in the setup of a covert channel, because shared memory is an efficient channel by itself: the Virtual Machines may use it to communicate and thus do not need a covert channel. However, when deduplication is allowed, this creates a form of implicit shared memory that may be used for a covert channel. This shared memory is said to be implicit because none of the Virtual Machines took the decision to share it. Only the hypervisor decided to dynamically share some memory pages and manage their consistency. It is known that deduplication allows covert channel (as well as side channels) and this is one reason why deduplication is not activated in many setups. Moreover, some widely deployed versions of hypervisor, also called a Virtual Machine Monitor (VMM), do not permit deduplication at all. For instance, there is no clear deduplication in Amazon Web Services (AWS) like EC2.

Another prior art proposes to use cache activity to detect the co-residency of foe virtual machines on a physical machine that is supposed to be exclusively owned by a user. It can only detect the presence of other virtual machines, and makes the assumption that the friendly virtual machines are already on the same physical machine. The user coordinates its virtual machine to silence them, avoiding using portions of the cache.

In many use cases, there is a need for strict isolation between several virtual machines sharing a same physical machine. In some cases however there is a need for covert communication channel between virtual machines. Such cases include: (1) A co-residency test that can provide a proof that several virtual machines share the same processing unit for some time. (2) A data exfiltration test that is typically used in software watermarking for proving technology infringement. (3) License checking tests and more generally stealthy ways of counting virtual machines that are sharing the same processing units. (4) A concealed transmission of information test that can detect keys or sources of entropy. (5) Other instances of need to test for a covert channel also exists for security tasks.

In modern machines, several covert channels may exist; based on CPU architecture, and in particular, leveraging access time in the Level 1 cache. The problem is that the efficiency of these covert channels dramatically decreases in modern contexts such as: execution on many core CPUs, and execution on frequently rescheduled virtual machines. Therefore, there is a need for an efficient covert channel having the properties of cross-core operation, cross-virtual machine operation, resilience to frequent rescheduling, not assuming deduplication, and high throughput.

### SUMMARY

This summary is provided to introduce a selection of concepts in a simplified form as a prelude to the more detailed description that is presented later. The summary is not intended to identify key or essential features of the invention, nor is it intended to delineate the scope of the claimed subject matter.

Aspects of the invention include use of a method that targets the last level cache (usually Level 3) that is shared across all cores of two virtual machines. The method exploits the inclusive feature of caches; allowing a core to evict caches lines in the private cache of another core in a multicore processor device which hosts both virtual machines. The invention includes a sender (first virtual machine) and a receiver (second virtual machine). The sender writes at specific memory addresses. This evicts lines and sets in the Level 3 cache of the sender. Through the inclusiveness property and the sharing of the Level 3 cache, this invalidates the corresponding sets in the Level 1 cache of the receiver. The receiver reads at least one set and measures the access time. The access time is used as a basis for determining if the sender sent a logical 1 or a logical 0. With this invention, and in contrast to prior art, there is no need for shared memory between the sender and the receiver or memory deduplication.

In one aspect of the invention, a method of passing a message between two virtual machines that use a multicore processor having inclusive cache includes providing a message bit from a first virtual machine to an encoder. The encoder encodes the message bit into a cache command directed to a lowest level cache of the core of the first virtual machine. The cache level command is executed at the lowest level cache of the first virtual machine if the message bit is a logical 1. A waiting a time is incurred if the message bit is a logical 0. At the second virtual machine, the cache is read and the access time of the read operation is recorded. At the second virtual machine a bit value of the message bit of the first virtual machine is determined based on the access time of the cache read. The determined bit value is placed into a register of the second virtual machine. The steps are repeated for each bit in the message of the first virtual machine. Each determined bit is collected by the register of the second virtual machine. This register of the second virtual machine then contains the digital message of the first virtual machine. This message was passed from the first virtual machine to the second virtual machine using a cache-based covert channel of inclusive cache architecture of a multicore processor hosting the two virtual machines. The method of the current invention avoids the use of non-cache shared memory and the use of non-cached common address space to as a covert channel.

In an embodiment of the invention, an apparatus for passing a message between two virtual machines using a cache-based communication channel. The apparatus includes a multicore processor having inclusive cache and hosting a first virtual machine and a second virtual machine. A first register in the first virtual machine provides a message bit to an encoder which encodes the message bit into a cache command directed to a lowest level cache of the core of the first virtual machine. A first processor core of the first virtual machine executes the cache command if the message bit is a logical 1 and waits a time interval if the message bit is a logical 0. A second processor core of the second virtual machine acts to read a cache of the second virtual machine and record an access time of the cache read. The second processor core determines a bit value of the message bit of the first virtual machine based on the access time of the cache read. A second register in the second virtual machine serves to collect successive bit values determined by the second processor core. The bit values in the second register represent a message passed using a cache-based communication channel of the multiprocessor core.

Additional features and advantages of the invention will be made apparent from the following detailed description of illustrative embodiments which proceeds with reference to the accompanying figures. It should be understood that the drawings are for purposes of illustrating the concepts of the disclosure and is not necessarily the only possible configuration for illustrating the disclosure.

### BRIEF DESCRIPTION OF THE DRAWINGS

The foregoing summary of the invention, as well as the following detailed description of illustrative embodiments, is better understood when read in conjunction with the accompanying drawings, which are included by way of example, and not by way of limitation with regard to the claimed invention. In the drawings, like numbers represent similar elements.
Figure 1 illustrates an example computer system that provides a multiple virtual machine environment in which the current invention may be practiced;
Figure 2 depicts cache hierarchy of a quad-core processor having the inclusive property;
Figure 3a depicts an example cache read hit in a receiver virtual machine using a multiple core processor according to aspects of the invention;
Figure 3b depicts an example cache flush operation in a sender virtual machine using a multiple core processor according to aspects of the invention;
Figure 3c depicts an example cache read miss in a receiver virtual machine using a multiple core processor according to aspects of the invention;
Figure 4 depicts an example functional diagram having aspects of the invention; and
Figure 5 depicts an example method according to aspects of the invention;

### DETAILED DISCUSSION OF THE EMBODIMENTS

In the following description of various illustrative embodiments, reference is made to the accompanying drawings, which form a part thereof, and in which is shown, by way of illustration, how various embodiments in the invention may be practiced. It is to be understood that other embodiments may be utilized and structural and functional modification may be made without departing from the scope of the present invention.

In one aspect of the invention, a new method to generate a covert channel that targets the last level cache (usually Level 3) that is shared across at least two cores in a multicore processor. This covert channel exploits the inclusive feature of caches, allowing a core to evict caches lines in the private cache of another core.

In one embodiment, the invention includes a sender and a receiver. A sender is a virtual machine, operating at least one core in a multicore processor, which acts to utilize the method of the current invention to send a message from a first virtual machine to a second virtual machine via covert channel. An example sender, as expressed in terms of Figure 2 is a virtual machine operating either a first core 210 or a second core 220 to send a message to second virtual machine. The sender writes at specific memory addresses. This evicts lines and sets in the Level 3 cache of the sender. Through the inclusiveness property and the sharing of the Level 3 cache, this invalidates the corresponding sets in the Level 1 cache of the receiver. In the current invention, the inclusive cache is shared across at least two cores of the multicore processor. Also, the current invention does not require the use of shared memory, nor common address space in memory as a covert channel.

The receiver reads at least one set and measures the access time. A receiver is a virtual machine, operating at least one core in a multicore processor, which acts to utilize the method of the current invention to receive a message from a first virtual machine to a second virtual machine via a covert channel. An example receiver, as expressed in terms of Figure 2, is a virtual machine operating either a third core 230 or a fourth core 240 to receive a message sent to the second virtual machine. One of skill in the art will recognize that a quad core device may support up to four virtual machines. The allocation of cores to a sender or receiver virtual machine depends on the specific configuration of the computer system containing the virtual machines. For example, a sender can be a first virtual machine operating a first core to send a message via a convert channel to a receiver in a second virtual machine operating a second core. The other two cores in the quad core processing device may be dedicated to other virtual machines. It is noted that with the current invention, in contrast to prior art, there is no need for shared external main memory between the sender and the receiver or memory deduplication. Shared L3 cache and its inclusiveness property are used to generate a covert channel.

The current invention relies on the fact that the lowest level cache (LLC) is shared and inclusive. Those two characteristics are present in all CPUs from Nehalem to Haswell architecture, i.e., all modern Intel™ CPUs, including CPUs that are found in Amazon™ EC2. At a high level view, the sender writes in the cache to send bits, and the receiver constantly probes the cache to receive the bits.

The basic operation of the sender is now described according to aspects of the invention. To build a cross-virtual machines and cross-cores covert channel, the sender needs a way to interfere with the private cache of the other cores. In our covert channel, the sender leverages the inclusive feature of the L3 cache. As the L3 cache is shared, it is possible to evict lines that are owned by other processes, and in particular processes on other cores. In principle, the sender writes in a memory set, and the receiver probes the same memory set. However, virtualization brings another level of indirection for memory addressing. A memory region in a virtual machine has a virtual address that corresponds to a "physical address" of the guest. This address is again translated as a machine address (host physical address). A process in a virtual machine that knows a virtual address has no way to know the physical address of the guest, let alone the actual machine address. As a result, a process has no way of targeting a particular set in the cache. The sender and the receiver have thus no way to synchronize the cache set they are working on. The novel technique herein allows the sender to flush the whole cache, and for the receiver to probe a single memory set. That way, the sender is guaranteed to have affected the set that the receiver reads.

To evict lines, we can either read or write data. In one embodiment, a data write is used. We leverage the replacement policy to evict lines from the L3 cache is leveraged. The size of the buffer written to is influenced by the size of the L3 cache that is itself influenced by the degree of associativity and the number of sets. Moreover, the quantity of data to be written is influenced by the replacement policy (which details are generally not fully disclosed by manufacturers). Considering a pure LRU policy, only n lines need be written to in each set to flush all the lines of the set, n being the number of ways. The strict LRU policy uses one line per write and thus is not able to memorize more than the n last writes. But other policies could apply more efficient or predictive algorithms where some sets are not flushed even after n writes. The replacement policies on modern CPUs drastically affect the performance of caches. Therefore they are well guarded secrets. Pseudo-LRU policies are known to be inefficient for memory intensive workloads of working sets greater than the cache size. Adaptive policies are more likely to be used in actual processors. However, the inventors have found that it is sufficient to write n lines by set to recover the message.

Algorithm 1 summarizes the steps performed by the sender. The sender flushes the entire L3 cache to send a '1'. It thus flushes the L1 of the receiver, who is going to experience a cache miss and thus a longer probe duration time. A probe time is an access time. To send a '0', the sender just waits. The receiver is going to experience a cache hit and thus a short probe duration time. The sender waits for a determined time after sending a bit to allow the receiver to distinguish between two adjacently sent bits.

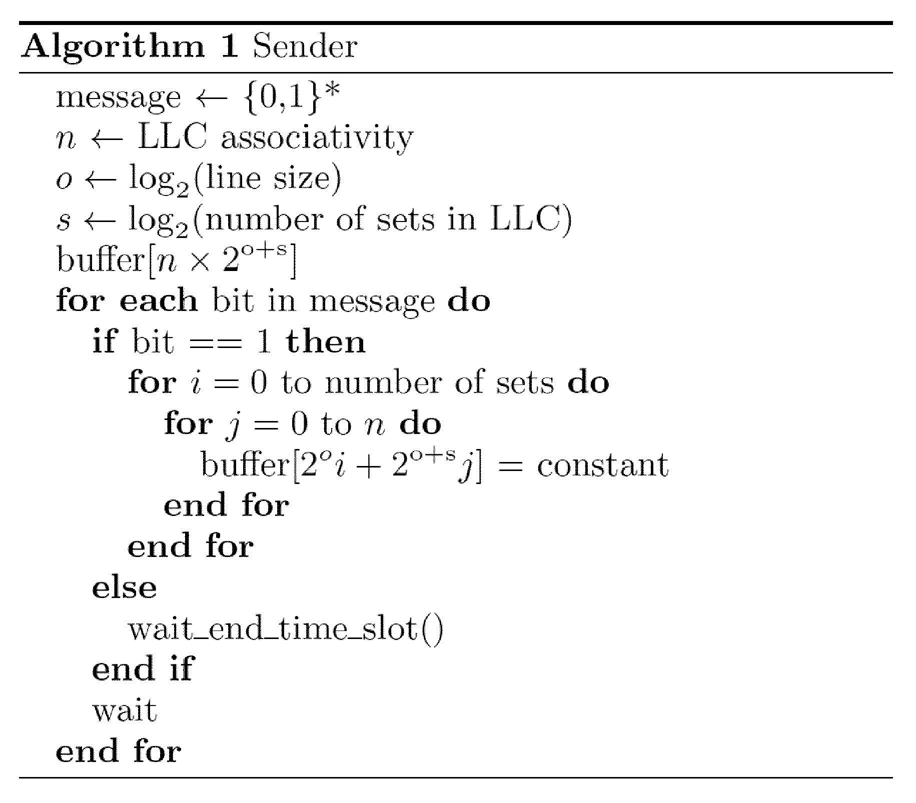

Details of the sender virtual machine are now discussed. The sender needs a way to interfere with the private cache of the other cores. In the covert channel of the present invention, the sender leverages the inclusive feature of the L3 cache. As the L3 cache is shared amongst the cores of the same processor, the sender may evict lines that are owned by other processes, and in particular processes running on other cores. In one aspect of the invention, the sender virtual machine writes in a set, and the receiver virtual machine probes the same set. However, due to virtualization, the sender and the receiver cannot agree on the cache set they are working on. The present technique of the current invention consists for the sender to flush the whole cache, and for the receiver to probe a single set. That way, the sender is guaranteed to affect the set that the receiver reads, thus resolving the addressing uncertainty. Resolving addressing uncertainty in the receiver detecting a sender cache change is an advantage of the present invention. To evict lines, the sender may either read or write data. In the current invention, a data write is chosen because, for the receiver, it causes a write miss that has a higher penalty than a read miss, and thus leads to a less noisy signal. The replacement policy is leveraged to evict lines from the L3 cache. The replacement policy, as well as the associativity property, influences the size of the buffer that is written into. Considering a pure LRU policy, a write to only *n* lines in each set to flush all the lines of the set, *n* being the number of ways. The iteration over the buffer is highly dependent on the cache microarchitecture. The parameters are: the LLC associativity *n*, the number of sets *2^{s},* and the line size *2°.* To send a '1', the sender writes in each line *j* (*n* times) of each set *i*, with the following memory pattern: *2°i* + 2^{*(o*+*s)*}. The order of the writing is important. Simply iterating over the buffer leads to iterate over sets and evict a single line of each set before going through the first set again. With too many sets, the receiver will probe a set before the sender evicts all lines. Therefore the signal will be lost. An iteration flushes the entire L3. It thus flushes the L1 of the receiver, resulting in a cache miss and thus a longer probe time.

To send a '0', the sender just idles. The receiver gets a cache hit and thus a short probe time. The sender waits for a determined time *w* after sending a bit to allow the receiver to distinguish between two consecutive bits.

The basic operation of the receiver is now described according to aspects of the invention. The receiver constantly probes lines of the same cache set in its L1 cache and measures the access time. It corresponds to a read pattern that changes the address bits of the tag, but not the set nor the offset. Several methods allow signal extraction. Signal extraction involves the detection of either a logical 1 or a logical 0 based on the access time of the L1 cache of the receiver. The receiver detects only one bit at time. Essentially, the receiver detects a flush of the cache by the sender as being a transmission of a single bit. Thus, many transmissions (cache flush or not) are needed to detect multiple bits for the covert message.

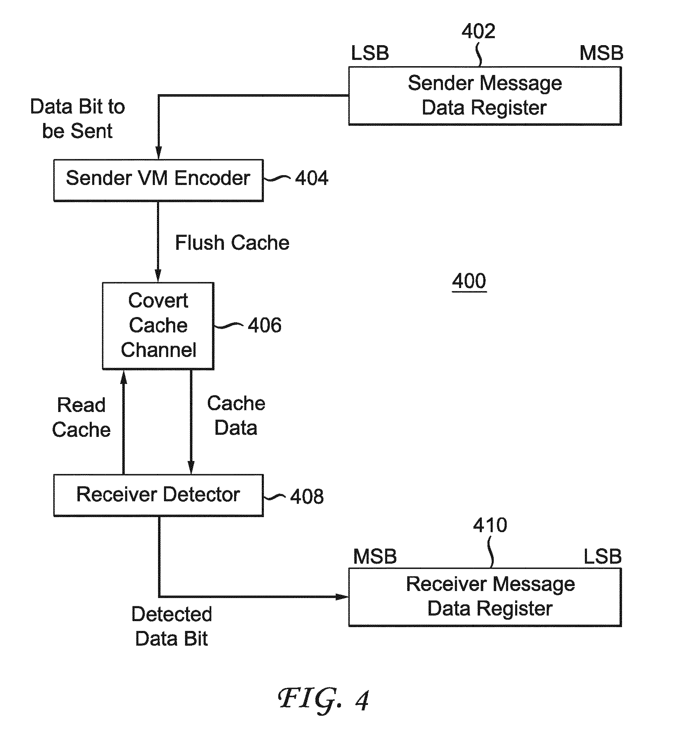

Figure 4 depicts a functional diagram 400 for the transmission and reception of a message using a covert channel between two virtual machines according to an aspect of the invention. A sender message data resister 402 is located in memory of a first virtual machine, such as 110 of Figure 1. This first virtual machine is the sender virtual machine (VM). A first bit, either a most significant bit (MSB) or least significant bit (LSB) of the data register is sent to a sender VM encoder block 404. The sender core encoder block 404 represents the functionality of the sender virtual machine to execute algorithm 1 and send a flush cache command to the L3 cache if a logical 1 is to be sent across the covert channel. If a logical 0 is to be sent, the sender VM encoder 404 waits a time interval. In one experimental set, a 2 millisecond or 4 millisecond wait time interval may be used. The sender VM encoder receives the data bit to be sent from the data register 402 and acts to encode the bit into a cache command directed to the lowest level cache of the first virtual machine.

The covert cache channel 406 is a functional representation of the multi core processor used to service the sender virtual machine and the receiver virtual machine. Covert cache channel 406 is the functional covert path provided by multicore processor 130 of Figure 1. On the receiver side, a receiver detector 408 reads its cache. The receiver detector 408 represents hardware and software of the receiver virtual machine, such as 120 of Figure 1, which is used to interpret the received cache and access time information. Data from the cache read is received along with an access time for the read. In receiver detector 408, the access time is used to determine if the first virtual machine sent a logical 1 bit or a logical 0 bit. The detected data bit is provided to a receiver message data register 410 that can be used to collect the successive bits that are successively detected by the receiver virtual machine. The successive collected bits in the receiver message data register can then be used as a source of detected message bits. The detected message bits in register 410 may be subject to error correction and be interpreted by the receiving virtual machine. The meaning of the message received in the register 410 may be used or displayed by the receiving virtual machine.

After detection of a 1 or a 0, one bit at a time by the receiver, the detected bit is placed into a register, such as a shift register, in the receiver. This register accepts and stores each received and detected bit interpreted as being transmitted by the sender virtual machine. One location for the register is in memory available to the receiver virtual machine. Referring to Figure 1, if virtual machine 1 is the sender and virtual machine 2 is the receiver, then the collection register, not shown in Figure 1, which collects the received information and detected bits can be located in the main memory of virtual machine 2. It can be appreciated by those of skill in the art the collection register for detected bits of the receiver can exist in any memory space accessible via the programming of virtual machine 2, such as memory space, I/O space, and the like. After many detected bits are placed into the register, error correction may optionally be applied to the received bits to correct errors in the received and detected bits of the covert channel transmission. To translate a bit state transmitted by the sender, the receiver uses two reception and bit detection methods or techniques.

The first bit detection method involves simple extraction. This technique calculates the average access time over a predetermined time window. In one implementation, a 500 micro-second time window is used with a modern Intel™ processor. If the average access time exceeds a given threshold *t* then a logical 1 is determined (detected) to have been received, otherwise a logic 0 is interpreted as the detected received bit. The threshold *t* is typically deduced from the Level 3 cache read access time. For instance, in one embodiment, a threshold values of *t*=500 ticks (clock cycles) is used. As each received bit is detected, then the bit is transferred to a shift register in the receiver before the next bit is detected in the covert channel.

A second bit detection method involves filtering plus density-based spatial clustering of applications with noise (DBSCAN) clustering. This bit detection method reads and records bits of memory from the cache of the receiver. The read cache bits are stored in memory of the receiver virtual machine. Then a digital filter removes noise (denoising, thresholding, and the like) and the receiver then performs a DBSCAN clustering on the remaining values. Each cluster corresponds to a received and detected logical 1 transmitted from the sender virtual machine to the receiver virtual machine.

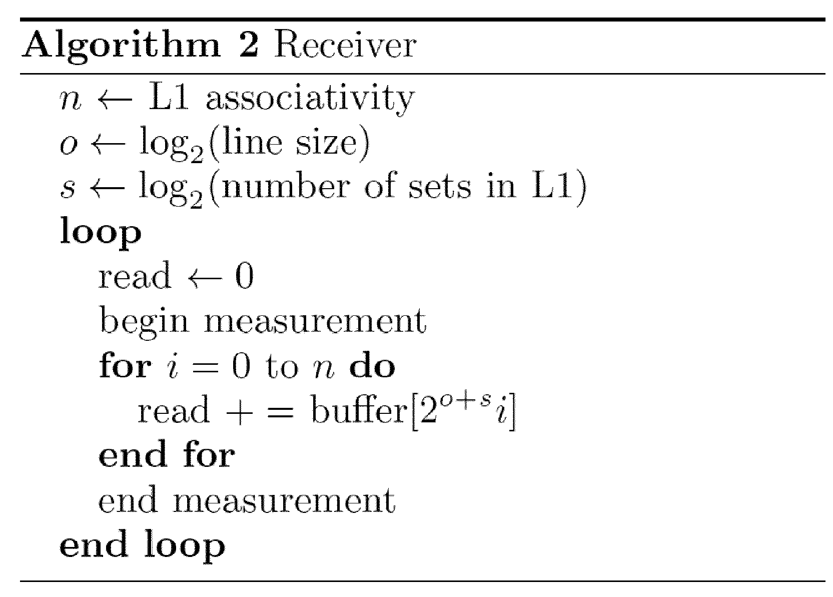

Details of the receiver virtual machine are now discussed. The receiver constantly probes lines of the same cache set in her L1 cache. The Algorithm 2 summarizes the steps performed by the receiver. The iteration is again dependent on the cache microarchitecture. To access each line *i* (*n* times) of the same set, the receiver reads a buffer -- and measures the time taken -- with the following memory pattern: *2^{(o+s)}i.* The cumulative variable read prevents optimizations from the compiler or the CPU, by introducing a dependency between the consecutive loads such that they happen in sequence and not in parallel. In the actual code, the inner for loop is unrolled to reduce unnecessary branches and memory accesses. The receiver probes a single set when the sender writes to the entire cache, thus one iteration of the receiver is faster than one iteration of the sender. The receiver and sender are not executed in a round-robin fashion, but the receiver runs continuously and concurrently with the sender. The receiver performs several measurements for each bit transmitted by the sender. The different bits from the measurements of the receiver are separated. In one implementation, the sender is waiting sometime *w* between the transmissions of consecutive bits. The sender then uses a clustering algorithm to separate the bits. In one embodiment, DBSCAN, a density-based cluster algorithm, is preferred over the popular *k*-means algorithm. A drawback of the *k*-means algorithm is that it takes the number *k* of clusters as an input parameter. In the instant case, it would mean knowing in advance the number of '1', which is not realistic. The DBSCAN algorithm instead takes two input parameters:
1) *minPts*: the minimum number of points in each cluster. If the number is too low, one could observe false positives, reading a '1' when there is none; if the number is too high, one could observe false negatives, not reading a '1' when there is one. In the current invention, *minPts =* 3 is used.
2) ∈*:* if a point belongs to a cluster, every point in its *∈* -neighborhood is also part of the cluster. In the current invention, *∈* is chosen to be close to *w*/*2*.

Experimental use of the second bit detection technique has resulted in a throughput of 400 BPS transfer of information from the sending virtual machine to the receiving virtual machine via the covert channel. This is an increase compared to prior art covert channel throughput.

Some advantages of the present invention include operation of the covert channel in virtual machines on the same computer such that operation is resilient to frequent rescheduling. The inventors have validated operation on an instance of Amazon™ Web Service Elastic Cloud Computing (AWS EC2) medium M3 (m3.medium). High throughput of the covert channel allows the transmitting of large payloads from a sending virtual machine to a receiver virtual machine.

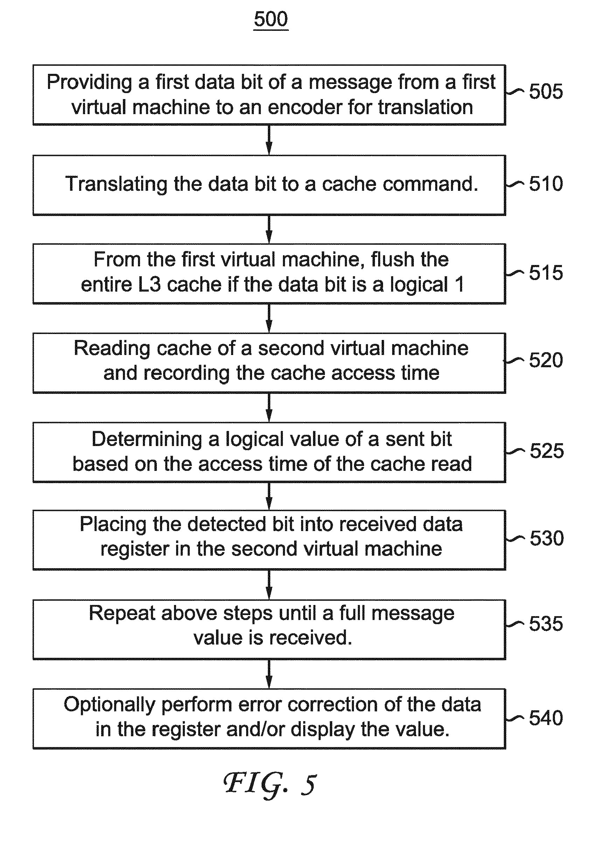

Figure 5 depicts an example method 500 according to aspects of the invention. At step 505, a first bit of a message to be sent from a first virtual machine to a second virtual machine using a cache based covert channel is provided to an encoding/translating function of the first virtual machine. At step 510, the presented bit is encoded (translated) into a cache command. If the presented bit is a logical 1, the encoding is to provide a cache flush to an inclusive L3 cache of a core of the first virtual machine. The first virtual machine having a multicore processor in common with a second virtual machine. If the presented bit is a logical 0, then the presented bit is translated or encoded to an action that is to wait a time period and not affect the L3 cache of the first virtual machine. The action of step 510 follows the action of algorithm 1. At step 515, the lowest level cache command is executed by flushing the entire L3 (lowest level cache (LLC)) cache if the presented bit is a logical 1 and waiting a time interval if the presented bit is a logical 0. The current invention does not use (avoids) the cflush command that is commonly known in some multi-core processors.

At step 520, the receiving virtual machine reads its cache and records the corresponding access time. It is noted by the inventors that use of the DBSCAN clustering method is advantageous because it does not require any "hidden" form of synchronization; such as knowing in advance the number of clusters to be found. At step 525, the logical value of the received information from the covert channel is determined. The logical bit value of the bit presented in the first virtual machine is determined in the second virtual machine by analyzing the access time of the cache read on the receiver virtual machine. The access time can be large and exceed a threshold *t* if there is no data available in the cache of the second virtual machine. The cache may not have the requested information because the cache line that is read does not exist in the cache memory. Then, higher layers of cache and finally main memory are accessed if the cache was flushed. This exhibits itself as a large access time. The large access time is indicative of a full cache flush occurring in the LLC (L3) cache of the first virtual machine which affected the cache of the second virtual machine due to the inclusiveness property of the cache in the multicore processor. If an access time *t* is exceeded, then the bit presented is determined to be a logical 1. If the access time is small, less than a threshold time *t*, then the inclusive cache of the multicore core processor was not flushed, the memory access is quick relative to a flushed cache, because the cache at the second virtual machine core was not changed, and the bit presented is determined to be a logical 0.

At step 530, the detected bit is placed into a register of the second virtual machine. Steps 535 repeats the above steps to obtain all of the bits of the message of the first virtual machine. In general, there are options to determine if all of the bits of the message are received. In one technique, the receiver may be programmed for a fixed number of cycles and then stop. In another technique, the receiver always listens and is stopped manually by an operator. In another technique, the receiver listens for sequences of bits and stops receiving when a specific sequence is detected. For example, if a binary marker, such as the binary form of the 0xDEADBEEF hexadecimal number is detected, then the process can stop. One technical effect of the steps of Figure 5 is that a message in a first virtual machine is sent to a second virtual machine using a cache-based covert channel. This effect is achieved by utilizing the inclusiveness property of the multi-level cache at the common multicore processor used to implement the two virtual machines. It is notable that the method 500 avoids and does not require non-cache shared memory and avoids and does not require common address space in non-cache memory as a covert channel.

At step 540 error detection and correction may be applied to the register contents. The value of the message or the interpretation of the value of the message may then be interpreted by the second virtual machine and properly used. One use is to display the message or the interpretation of the message to a user of the second virtual machine.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, hardware and software apparatus. An apparatus may be implemented in, for example, appropriate hardware, software, and firmware. The methods may be implemented in, for example, an apparatus such as, for example, a processor, or multiple processors, which refers to any processing device, including, for example, a computer, a microprocessor, an integrated circuit, or a programmable logic device.

Additionally, the methods may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random access memory ("RAM"), a read-only memory ("ROM") or any other magnetic, optical, or solid state media. The instructions may form an application program tangibly embodied on a computer-readable medium such as any of the media listed above or known to those of skill in the art. The instructions thus stored are useful to execute elements of hardware and software to perform the steps of the method described herein.

## Claims

1. A method of passing a message between two virtual machines that use a multicore processor having an inclusive cache shared across at least two cores, the message passed using a cache-based communication channel, the method comprising:
providing a message bit from a first virtual machine to an encoder (505);
executing a cache command at the lowest level cache of the first virtual machine if the message bit is a logical 1 and waiting a time interval if the message bit is a logical 0 (515);
reading a cache of the second virtual machine and recording an access time of the cache read (520);
determining, at the second virtual machine, a bit value of the message bit of the first virtual machine based on the access time of the cache read of the second virtual machine (525); and
placing the determined bit value into a register of the second virtual machine (530); and
repeating the above with a next bit of the message until all bits of the message of the first virtual machine are determined and collected in the register of the second virtual machine (535);
wherein the first virtual machine and the second virtual machine do not synchronize on a cache set for the cache-based communication channel, and wherein the method avoids use of non-cache shared memory and non-cache common address space as a covert channel.

2. The method of claim 1, wherein the step of executing the cache command at the lowest level cache of the first virtual machine comprises flushing L3 cache of the first virtual machine.

3. The method of claim 2, wherein flushing L3 cache flushes all levels of cache of the first virtual machine and evicts memory information from a L1 cache of the second virtual machine.

4. The method of claim 1, further comprising the step of performing error correction on bits of the register of the second virtual machine.

5. The method of claim 1, further comprising the step of displaying information conveyed by the bits of the register of the second virtual machine.

6. The method of claim 1, wherein the step of determining a bit value of the message bit of the first virtual machine based on the access time comprises determining the bit value to be a logical 1 if the access time exceeds a threshold value.

7. The method of claim 1, wherein the step of determining a bit value of the message bit of the first virtual machine based on the access time comprises determining the bit value to be a logical 0 if the access time less than a threshold value.

8. An apparatus for passing a message between two virtual machines, the message passed using a cache-based communication channel, the apparatus comprising:
a multicore processor (130) having an inclusive cache shared across at least two cores and hosting a first virtual machine (110) and a second virtual machine (120), and wherein the first virtual machine and the second virtual machine do not agree on a cache set used for the cache-based communication channel;
a first register (402) in the first virtual machine, the first register providing a message bit to an encoder (404) which encodes the message bit into a cache command directed to a lowest level cache (250) of the core of the first virtual machine if the message bit is a logical 1;
a first processor core (210) of the first virtual machine, the first processor core executing the cache command if the message bit is a logical 1 and waiting a time interval if the message bit is a logical 0;
a second processor core (230) of the second virtual machine, the second processor core acting to read a cache (222) of the second virtual machine and record an access time of the cache read, wherein the second processor core determines a bit value of the message bit of the first virtual machine based on the access time of the cache read;
a second register (410) in the second virtual machine, the second register serving to collect successive bit values determined by the second processor core;
wherein the bit values in the second register represent a message passed using a cache-based communication channel of the multiprocessor core.

9. The apparatus of claim 8, wherein the encoder in the first virtual machine comprises the first processor core executing an algorithm that encodes a logical 1 of the message bit into a cache flush.

10. The apparatus of claim 9, wherein the flush of the lowest level cache flushes all levels of cache of the first virtual machine and evicts memory information from a L1 cache of the second virtual machine.

11. The apparatus of claim 8, wherein error correction is performed on the message in the second register.

12. The apparatus of claim 8, further comprising a user interface and display of the second virtual machine for displaying the message in the second register.

13. The apparatus of claim 8, wherein the second processor core determines a bit value to be a logical 1 if the access time exceeds a threshold value.

14. The apparatus of claim 8, wherein the second processor core determines a bit value to be a logical 0 if the access time is less than a threshold value.

15. The apparatus of claim 8, wherein the message is passed using a cache-based covert channel that avoids use of non-cache shared memory and non-cache common address space.
